# EUROPÄISCHE PATENTSCHRIFT

(11) **EP 4 065 826 B1**
(45) Veröffentlichungstag und Bekanntmachung des Hinweises auf die Patenterteilung: **08.01.2025**
(21) Anmeldenummer: 20808357.6
(22) Anmeldetag: 17.11.2020
(51) Int. Cl.: F01N 3/20, F01N 3/28, F01N 13/00

(54) **VORRICHTUNG ZUR ABGASNACHBEHANDLUNG**
EXHAUST GAS AFTERTREATMENT DEVICE
DISPOSITIF DE POST-TRAITEMENT DE GAZ D'ÉCHAPPEMENT

(30) Priorität: 27.11.2019 DE 102019218354
(43) Veröffentlichungstag der Anmeldung: 05.10.2022
(73) Patentinhaber: Vitesco Technologies GmbH, 93055 Regensburg (DE)
(72) Erfinder: HIRTH, Peter, 81737 München (DE); SCHMIDT, Christian, 81737 München (DE); SCHORN, Christian, 81737 München (DE)
(74) Vertreter: Vitesco Technologies
(86) Internationale Anmeldenummer: PCT/EP2020/082362
(87) Internationale Veröffentlichungsnummer: WO 2021/104936

(56) Entgegenhaltungen:
- WO-A1-2004/112433
- CN-A- 1 680 689
- DE-A1- 102009 018 182
- DE-A1- 102011 110 664
- DE-A1- 19 602 266
- DE-A1- 4 434 673
- JP-A- H0 754 644
- US-A1- 2007 056 263

## Beschreibung

### Technisches Gebiet

Die Erfindung betrifft eine Vorrichtung zur Behandlung von Abgasen eines Verbrennungsmotors, mit einer in einem Gehäuse angeordneten Heizscheibe und mit einem der Heizscheibe in Strömungsrichtung nachgelagerten in dem Gehäuse angeordnetem Hauptkatalysator, wobei die Heizscheibe und der Hauptkatalysator entlang der Strömungsrichtung entlang mehrerer Strömungskanäle durchströmbar sind.

### Stand der Technik

Zur Aufheizung des in Abgasanlagen strömenden Abgases und den in der Abgasanlage angeordneten Katalysatoren werden unter anderem elektrische Heizvorrichtungen genutzt. Bekannt sind hier beispielsweise elektrische Heizkatalysatoren, die einen vom Abgas durchströmbaren Wabenkörper aufweisen und weiterhin eine Heizvorrichtung, wie beispielsweise einen Heizleiter. Ein solcher Heizkatalysator oder auch eine Heizscheibe wird über geeignete Stützmittel gegenüber einem sogenannten Stützkatalysator abgestützt. Ein Stützkatalysator kann beispielsweise ein Oxidationskatalysator, ein SCR-Katalysator oder ein anderer zur Abgasnachbehandlung geeigneter Katalysator sein. Diese Hauptkatalysatoren sind regelmäßig auch durch beschichtete metallische Wabenkörper gebildet.

Die DE 44 34 673 A1 offenbart eine Vorrichtung zur katalytischen Umsetzung von Abgasen in einem Abgassystem, insbesondere für ein Abgassystem einer Verbrennungskraftmaschine, vorzugsweise für Ottomotoren. Die Vorrichtung umfasst wenigstens zwei in einem äußeren Mantelrohr angeordnete, nacheinander von einem Abgas durchströmbare Wabenkörper, wobei die Wabenkörper mittels in die Wabenkörper hineinragenden Stützelementen miteinander mechanisch verbunden sind. Einer der Wabenkörper ist mit einem Abstand zum äußeren Mantelrohr angeordnet und weist wenigstens zwei mit der Mantelfläche des Wabenkörpers verbundene Schalen auf, die jeweils mit einem elektrischen Stromanschluss verbunden sind. Ferner weist die Vorrichtung elektrisch isolierende Verbindungselemente auf, wobei jedes Verbindungselement mit seinem einen Ende mit der Schale und mit seinem anderen Ende mit dem benachbarten Wabenkörper verbunden ist.

Die DE 196 02 266 A1 offenbart einen Brennkraftmaschinen-Abgaskatalysator mit einer als Metallträger-Katalysator ausgebildeten Heizzone, stromab derer ein weiterer Katalysatorkörper vorgesehen ist. Die Heizzone erstreckt sich lediglich über einen Teilbereich des Abgas-Strömungsquerschnittes, so dass mit der zur Verfügung gestellten elektrischen Heizenergie lediglich eine geringe Menge von Wärmekapazität aufgeheizt werden muss. Um dabei einen überproportionalen Anteil des Abgasstromes durch die Heizzone zu leiten, ist stromauf derselben eine düsenartige Verengung des Strömungsquerschnittes vorgesehen. Alternativ kann die Heizzone von einem Stütz-Katalysatorkörper umgeben sein.

Die DE 10 2009 018182 A1 offenbart einen elektrisch beheizbarer Wabenkörper mit Kanälen, aufweisend zumindest eine Heizscheibe mit zumindest einem ersten Lagenstapel aus einem elektrisch leitfähigem Material und einem zweiten Lagenstapel aus einem elektrisch leitfähigem Material, wobei der erste Lagenstapel und der zweite Lagenstapel miteinander verschlungen und voneinander elektrisch isoliert sind, wobei der erste Lagenstapel einen ersten Strompfad zur Durchleitung eines elektrischen Stromes für einen ersten Heizkreis bildet und der zweite Lagenstapel einen zweiten Strompfad zur Durchführung eines elektrischen Stromes für einen zweiten Heizkreis bildet.

Die WO 2004/112433 A1 offenbart ein Verfahren zur Herstellung eines elektrischen Heizgerätes. Wobei das Verfahren die Schritte des Laminierens eines gewellten Streifens und eines flachen Streifens, die jeweils aus einer dünnen Metallplatte hergestellt sind, um eine Heizleitung zu bilden, des Aufbringens eines Zusatzmetalls oder einer blechartigen Hartlötfolie auf die Heizleitung und des Hartlötens in einem Vakuumofen umfasst. Für das Verfahren wird eine Schablone verwendet, um eine vorbestimmte Form der Heizleitung beizubehalten.

Die JP H07 54644 A offenbart ein Verfahren zur Verringerung des Energieverbrauchs durch teilweises Erhitzen eines Katalysatorträgers. Hierzu wird Heizteil bereitgestellt, das mit dem Katalysatorträger so verbunden ist, dass es teilweise elektrifiziert wird. Ein metallischer Träger, der einen Kurzschlussdurchgang in radialer Richtung ausbildet, ist an der Position einer ersten Katalysatorvorrichtung angebracht, und nur der metallische Träger ist mit der Stromversorgung, wie einer Batterie, verbunden. Der Kurzschlusskanal ist an der Endfläche auf der stromaufwärtigen Seite ausgebildet, und der elektrische Widerstand des Kurzschlusskanals ist kleiner als der eines bandartigen Körpers zur Bildung einer wabenartigen Struktur, so dass ein großer Strom zum Kurzschlusskanal fließt.

Nachteilig an solchen Vorrichtungen mit elektrischen Heizkatalysator und Stützkatalysatoren mit metallischen Wabenkörpern ist insbesondere, dass beide Katalysatoren elektrisch leitfähig sind. Um Kurzschlüsse zu verhindern, müssen daher die Stützmittel, mit denen die Wabenkörper verbunden sind, eine elektrische Isolation aufweisen und so die Wabenkörper elektrisch voneinander isolieren. Dies macht den Aufbau insgesamt kompliziert und aufwändig.

### Darstellung der Erfindung, Aufgabe, Lösung, Vorteile

Daher ist es die Aufgabe der vorliegenden Erfindung eine Vorrichtung zu schaffen, welche die Vorteile eines metallischen Heizkatalysators ausnutzen und gleichzeitig die Nachteile aufgrund der Notwendigkeit der zusätzlichen elektrischen Isolation minimieren.

Die Aufgabe hinsichtlich der Vorrichtung wird durch eine Vorrichtung mit den Merkmalen von Anspruch 1 gelöst.

Ein Ausführungsbeispiel der Erfindung betrifft eine Vorrichtung zur Behandlung von Abgasen eines Verbrennungsmotors, mit einer in einem Gehäuse angeordneten Heizscheibe und mit einem der Heizscheibe in Strömungsrichtung nachgelagerten in dem Gehäuse angeordnetem Hauptkatalysator, wobei die Heizscheibe und der Hauptkatalysator entlang der Strömungsrichtung entlang mehrerer Strömungskanäle durchströmbar sind, wobei die Heizscheibe durch einen metallischen Wabenkörper gebildet ist und der Hauptkatalysator aus einem keramischen Wabenkörper gebildet ist, der mittels eines Fixiermittels, wie beispielsweise einer Quellmatte oder einer Lagermatte, gegenüber dem Gehäuse fixiert ist, wobei die Heizscheibe mittels einer elektrischen Durchführung, welche durch das Gehäuse von außen nach innen geführt ist, elektrisch kontaktiert ist, wobei die Heizscheibe in eine keramische Halbschale eingesetzt ist.

Ein Gehäuse kann bevorzugt ein Mantelrohr sein, in welches die jeweiligen Elemente, wie die Heizscheibe und der Hauptkatalysator hinein eingesetzt werden. Das Mantelrohr ist dabei Teil der Abgasstrecke und kann von dem Abgas entlang einer Hauptdurchströmungsrichtung durchströmt werden.

Die Heizscheibe ist bevorzugt aus einem metallischen Wabenkörper gebildet, der eine Vielzahl von Strömungskanälen aufweist, die entlang einer Hauptdurchströmungsrichtung durchströmbar sind. Der Hauptkatalysator ist vorteilhafterweise aus einem keramischen Werkstoff und weist ebenfalls eine Mehrzahl von durchströmbaren Strömungskanälen auf. Der Hauptkatalysator kann beispielsweise ein Oxidationskatalysator, ein SCR-Katalysator oder ein anderer Katalysator sein, der zur Abgasnachbehandlung regelmäßig Verwendung findet. Hierbei kann insbesondere die Beschichtung der Keramik sowie die Materialkomposition der Keramik für den entsprechenden Anwendungszweck variiert werden.

Das Fixiermittel kann bevorzugt durch eine Quellmatte oder eine Lagermatte gebildet sein. Eine Quellmatte ist ein Fasergewebe, welches dazu verwendet wird den keramischen Wabenkörper im Mantelrohr sicher zu fixieren. Hierzu zählt einerseits die Verhinderung einer Relativbewegung gegenüber dem Mantelrohr und zusätzlich die Vermeidung von mechanischen Beschädigungen des Wabenkörpers. Diese Matte kann derart gestaltet sein, dass sie im Zuge der üblichen Wärmebehandlungen und sonstigen Verarbeitungsprozesse ihr Volumen verändert, insbesondere aufquellt, um eine sichere Fixierung zu ermöglichen. Alternativ können geeignet dimensionierte Lagermatten verwendet werden, die keine Volumenänderung erfahren.

Zur elektrischen Kontaktierung können eine oder mehrere elektronische Durchführungen vorgesehen sein. Hierzu sind im Stand der Technik bereits unterschiedliche Konzepte zur temperatursicheren und stabilen dauerhaltbaren Durchführung von elektrischen Leitern bekannt.

Eine keramische Halbschale kann insbesondere eine durchströmbare Struktur sein. Diese kann beispielsweise porös sein oder ebenfalls eine Vielzahl von Öffnungen aufweisen, die ein Durchströmen erlauben. Die Halbschale kann bevorzugt topfartig ausgebildet ein und einen durchströmbaren Bodenbereich aufweisen sowie zumindest teilweise in Umfangsrichtung umlaufende Seitenwände. Die Heizscheibe kann ihrerseits in die keramische Halbschale eingelegt oder in diese eingedrückt sein.

Die keramische Halbschale kann sich über den gesamten Querschnitt der Heizscheibe erstrecken oder auch nur in Form eines bandförmigen Stegs unter der Heizscheibe verlaufen.

Die Verbindung der Heizscheibe mit der keramischen Halbschale kann beispielweise über Dorne erfolgen, welche als Teil der keramischen Halbschale ausgebildet sind und in Strömungskanäle der Heizscheibe eingreifen.

In einer nicht zur Erfindung gehörigen Ausführung ist es besonders vorteilhaft ist es, wenn der Außendurchmesser der Heizscheibe geringer ist als der Innendurchmesser des Gehäuses, wobei ein ringförmiger Luftspalt zwischen dem Gehäuse und der Heizscheibe ausgebildet ist. Der Luftspalt dient insbesondere der elektrischen Isolation der Heizscheibe gegenüber dem Mantelrohr, um so Kurzschlüsse und weitere ungewollte Stromflüsse zu verhindern.

In einer weiteren nicht zur Erfindung gehörenden Ausführung ist es auch vorteilhaft, wenn die Heizscheibe mittels mehrerer Stützstifte gegenüber dem Hauptkatalysator abgestützt und zu diesem beabstandet ist. Stützstifte können besonders bevorzugt aus Metall sein oder aus einer Keramik. Aufgrund des keramischen Hauptkatalysators ist eine zusätzliche elektrische Isolation zwischen der metallischen Heizscheibe und dem Hauptkatalysator, welcher mit dem Mantelrohr in Verbindung steht, nicht nötig. Daher können zweckmäßigerweise die für den individuellen Einsatzzweck geeignetsten Stützstifte Verwendung finden. Die Stützstifte können in die Heizscheibe eingedrückt und mit dieser verlötet sein. Das aus Heizscheibe und Stützstiften erzeugte Bauteil kann dann in den Hauptkatalysator eingesteckt werden. Alternativ können die Stützstifte auch zuerst im Hauptkatalysator befestigt werden und die metallische Heizscheibe im Nachgang aufgedrückt werden.

Abhängig von der Materialwahl können die Stützstifte mit dem Hauptkatalysator und/oder der Heizscheibe beispielsweise verklemmt, verklebt, verlötet oder verschraubt sein.

Auch ist es zu bevorzugen, wenn die keramische Halbschale mittels eines Fixiermittels, wie beispielsweise einer Quellmatte oder einer Lagermatte, gegenüber dem Gehäuse fixiert ist. Gegenüber dem Mantelrohr kann die keramische Haltschale ebenfalls mit einer Quellmatte abgestützt sein. Das Mantelrohr weist hierzu bevorzugt Aufnahmebereiche auf, die zur Aufnahme des Fixiermittels und des entsprechenden Wabenkörpers beziehungsweise der keramischen Halbschale dienen. Mittels gezielt ins Mantelrohr eingebrachter Vorsprünge, kann die Relativbewegung innerhalb des Mantelrohres minimiert werden.

Darüber hinaus ist es erfindungsgemäß, wenn die durch einen metallischen Wabenköper gebildete Heizscheibe in die keramische Halbschale eingedrückt ist. Insbesondere ist es wichtig, dass die keramische Halbschale den Abgasstrom nicht blockiert, indem beispielsweise die Strömungskanäle der Heizscheibe von ihr überdeckt werden. Bevorzugt weist daher die an der Gasaustrittsseite der Heizscheibe befindliche Fläche der keramischen Halbschale eine gitterartige Struktur auf, die idealerweise mit den Strömungskanälen der Heizscheibe deckungsgleiche Öffnungen aufweist.

Die keramische Halbschale kann beispielsweise Rastelemente aufweisen, mit denen die Heizschreibe nach dem Eindrücken in die keramische Halbschale fixiert wird. Auch eine stoffschlüssige Verbindung zwischen der Heizscheibe und der keramischen Halbschale ist möglich.

Weiterhin ist es vorteilhaft, wenn der Wabenkörper des Hauptkatalysators an einer seiner Stirnflächen eine der Form der Heizscheibe angepasste Ausnehmung aufweist, wobei die Heizscheibe in die Ausnehmung in dem Wabenkörper eingedrückt ist. Dies ist insbesondere vorteilhaft, um eine Integration der Heizscheibe in den keramischen Hauptkatalysator hinein zu ermöglichen. Die Ausnehmung kann direkt bei der Formgebung des Wabenkörpers erzeugt werden oder nachträglich durch ein spanendes Verfahren, beispielsweise Fräsen.

Analog zu der keramischen Halbschale sollten die Strömungskanäle der Heizscheibe nicht durch die Struktur des Hauptkatalysators überdeckt sein. Im Idealfall sind die Strömungskanäle der Heizscheibe und des Hauptkatalysators deckungsgleich miteinander.

Der Hauptkatalysator kann Dorne aufweisen, welche in einzelne der Strömungskanäle der Heizscheibe zum Zwecke der Fixierung eingreifen.

In einer weitern nicht zur Erfindung gehörigen Ausführung ist es zweckmäßig, wenn der Wabenkörper des Hauptkatalysators im Bereich der Ausnehmung zumindest eine in radialer Richtung verlaufende Bohrung aufweist, wobei die elektrische Kontaktierung der Heizscheibe durch diese Bohrung zur Heizscheibe geführt ist.

Eine solche Bohrung ist zur Durchführung des elektrischen Leiters an die metallische Heizscheibe heran notwendig. Je nach Anzahl der elektrischen Durchführungen sind am Wabenkörper des Hauptkatalysators entsprechend viele Bohrungen vorzusehen.

In einer weiteren nicht zur Erfindung gehörigen Ausführung ist es darüber hinaus vorteilhaft, wenn durch einzelne der im Wabenkörper des Hauptkatalysators ausgebildeten Strömungskanäle Stützstifte von der Gaseinlassseite zur Gasauslassseite des Wabenkörpers geführt sind. Vorteilhaft sind die Stützstifte gegenüber der Gaseinlassseite und/oder der Gasauslassseite fixiert.

Stützstifte, die vollständig entlang der Strömungskanäle durch den keramischen Wabenkörper des Hauptkatalysators geführt sind, bieten aufgrund der langen geführten Strecke eine besonders hohe Stabilität. Gegenüber dem Wabenkörper können diese beispielsweise mit Verschraubungen oder Klemmplatten fixiert werden, welche an der Gaseinlassseite und der Gasauslassseite angebracht sind.

In einer weiteren nicht zur Erfindung gehörigen Ausführung ist es darüber hinaus vorteilhaft, wenn die Stützstifte über die Gaseinlassseite des Wabenkörpers des Hauptkatalysators hinausstehen und die Heizscheibe auf die überstehenden Bereiche der Stützstifte aufgedrückt ist.

In einer alternativen nicht zur Erfindung gehörigen Ausführung ist es außerdem zu bevorzugen, wenn die Heizscheibe mittels Stützstiften gegenüber einem metallischen als Stützkatalysator dienenden Wabenkörper abgestützt ist, wobei der Stützkatalysator an seinem Außenumfang mit der Innenfläche des Gehäuses verbunden ist. Die Heizscheibe wird somit über die Verbindung mit dem Stützkatalysator gegenüber dem Mantelrohr fixiert. Sofern die Stützstifte zur Verbindung der Heizscheibe mit dem Stützkatalysator elektrisch leitfähig sind, ist zu beachten, dass ein elektrischer Stromfluss hin zum Mantelrohr erzeugt wird. Über geeignet isolierte Stützstifte kann dies verhindert werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine Schnittansicht durch ein Gehäuse mit einem keramischen Hauptkatalysator, einer metallischen Heizscheibe und mit Stützstiften, die die Heizscheibe gegenüber der Hauptkatalysator beabstanden,
- Fig. 2: eine Schnittansicht durch ein Gehäuse, wobei die Heizscheibe in eine zum Hauptkatalysator beabstandete keramische Halbschale eingesetzt ist,
- Fig. 3: eine Schnittansicht durch ein Gehäuse, wobei die Heizscheibe in eine Ausnehmung an der Stirnseite des Hauptkatalysators eingesetzt ist,
- Fig. 4: eine Schnittansicht durch ein Gehäuse, wobei die Heizscheibe gegenüber dem Hauptkatalysator mittels Stützstiften abgestützt ist, welche durch den gesamten Hauptkatalysator geführt sind, und
- Fig. 5: eine Schnittansicht durch ein Gehäuse, wobei die Heizscheibe mittels Stützstiften gegenüber einem dem Hauptkatalysator vorgelagerten Stützkatalysator abgestützt ist.

### Bevorzugte Ausführung der Erfindung

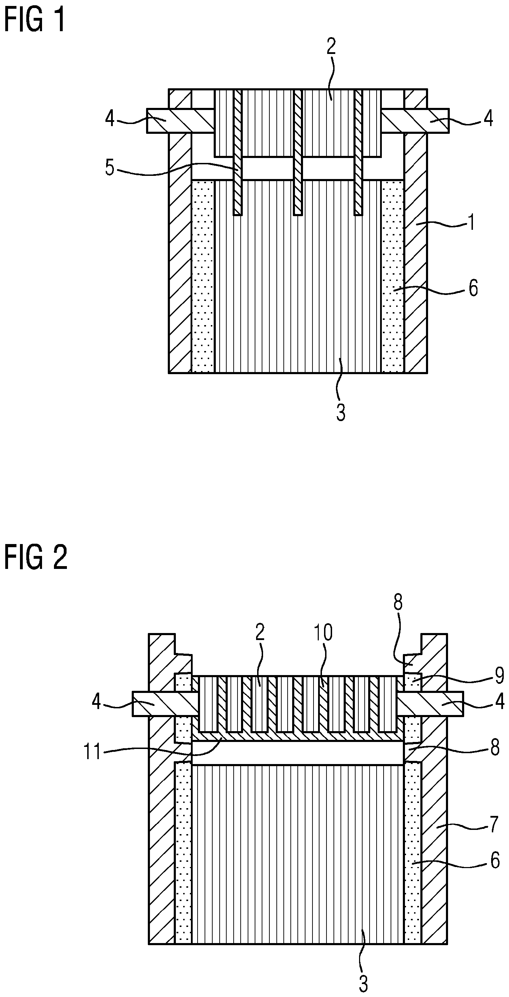

Die Figur 1 zeigt eine Schnittansicht, wobei ein als Gehäuse dienendes Mantelrohr 1, eine Heizscheibe 2, ein Hauptkatalysator 3, eine elektrische Durchführung 4, sowie Stützstifte 5 gezeigt sind, welche die Heizscheibe 2 vom Hauptkatalysator 3 beabstanden. Die Figur 1 zeigt eine allgemeine Ausgestaltung, welche nicht Teil der Erfindung ist.

Die Heizscheibe 2 ist durch einen metallischen Wabenkörper gebildet. Der Hauptkatalysator 3 ist ein keramischer Wabenkörper, welcher seinem Einsatzzweck entsprechend beispielsweise mit einer geeigneten Beschichtung beschichtet sein kann. Der Hauptkatalysator ist mittels einer Quellmatte 6 gegenüber dem Mantelrohr 1 fixiert. Die Quellmatte 6 kann zusätzlich zu ihrer fixierenden Wirkung auch eine elektrische Isolationswirkung aufweisen.

Die elektrische Durchführung 4, im Beispiel der Figur 1 sind zwei elektrische Durchführungen 4 vorgesehen, dient zur elektrischen Kontaktierung der Heizscheibe 2. Hierzu bildet die elektrische Durchführung 4 eine temperaturfeste und elektrisch gegenüber dem Mantelrohr 1 isolierende Führung für einen elektrischen Leiter aus. Die elektrische Durchführung 4, welche beispielsweise durch eine Hülse gebildet ist, kann bevorzugt mit dem Mantelrohr 1 verschweißt werden.

Die Stützstifte 5 können aus einem metallischen Werkstoff erzeugt sein oder aus einem keramischen Werkstoff. Bevorzugt werden die Stützstifte 5 in einzelne Strömungskanäle der Wabenkörper der Heizscheibe 2 und des Hauptkatalysators 3 eingesteckt. Zur weiteren Absicherung der Verbindung, können die Stützstifte 5 beispielsweise mit den Wabenkörpern verlötet werden. Kernaufgabe der Stützstifte 5 ist die Fixierung der Heizscheibe 2 innerhalb des Mantelrohrs 1, so dass die elektrisch kontaktierte Heizscheibe 2 nicht mit dem Mantelrohr 1 in elektrisch leitenden Kontakt gerät.

Figur 2 zeigt eine erfindungsgemäße Vorrichtung zur Abgasnachbehandlung. Identische Teile sind mit denselben Bezugszeichen der Figur 1 versehen.

Der Hauptkatalysator 3 ist ebenfalls unter Verwendung einer Quellmatte 6 gegenüber dem Inneren des Mantelrohres 7 abgestützt. Das Mantelrohr 7 weist an seiner Innenfläche Absätze 8 auf, welche der axialen Fixierung der Wabenkörper 3, 2 und der verwendeten Quellmatten 6, 9 dienen.

Die Absätze können vollständig in Umfangsrichtung umlaufend angeordnet sein oder auch nur abschnittsweise.

Die Heizscheibe 2 ist in eine keramische Halbschale 11 eingesetzt. Fixiert ist die Heizscheibe 2 mittels Dornen 10, welche in einzelne Strömungskanäle der Heizscheibe 2 eingreifen können, oder am Außenumfang der Heizscheibe 2 anliegen. Die Heizscheibe 2 kann mit der keramischen Halbschale 11 eine Presspassung bilden, wodurch sie in der Halbschale fixiert wird.

Die keramische Halbschale 11 ist mittels einer zweiten Quellmatte 9 zwischen den Absätzen 8 fixiert. Zwischen der Heizscheibe 2 und dem keramischen Wabenkörper 3 ist ein Luftspalt ausgebildet, wodurch die beiden Elemente in axialer Richtung zueinander beabstandet sind.

Die elektrische Durchführung 4 ist in radialer Richtung durch das Mantelrohr 7, die Quellmatte 9 und gegebenenfalls durch die keramische Halbschale 11 geführt, um die Heizscheibe 2 zu kontaktieren.

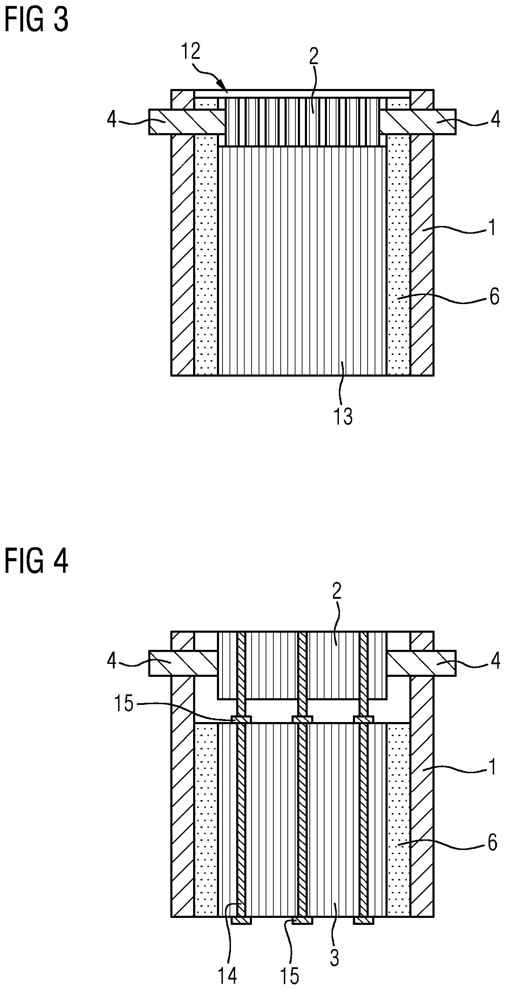

Figur 3 zeigt eine weitere nicht zur Erfindung gehörige Anordnung, wobei die Heizscheibe 2 in eine Ausnehmung 12 im keramischen Wabenkörper 13 eingesetzt ist. Der Wabenkörper 13 ist mittels einer Quellmatte 6 gegenüber dem Mantelrohr 1 abgestützt. Die elektrische Durchführung 4 ist durch das Mantelrohr 1, die Quellmatte 6 und den Wabenkörper 13 an die Heizscheibe 2 geführt.

Die Ausnehmung 12 ist stirnseitig in den Wabenkörper 13 eingebracht und kann mit der Heizscheibe 2 eine Presspassung bilden oder anderweitige Fixierungsmittel für die Heizscheibe 2 im Wabenkörper 13 aufweisen. Wie auch bei Figur 2 sind auch Dorne, welche in die Strömungskanäle der Heizscheibe 2 eingreifen vorsehbar.

Die Figur 4 zeigt einen nicht zur Erfindung gehörigen Aufbau mit einem keramischen Wabenkörper 3, der mit einer Quellmatte 6 gegenüber dem Mantelrohr 1 abgestützt ist. Die Heizscheibe 2 ist mittels der elektrischen Durchführung beziehungsweise den Durchführungen 4 elektrisch kontaktiert.

Im Unterschied zu den vorausgegangenen Figuren 1 bis 3 sind hier nun Stützstifte 14 gezeigt, welche durch den keramischen Wabenkörper 3 geführt sind. Dabei sind die Stützstifte 14 entlang einzelner Strömungskanäle von der Gaseinlassseite zur Gasauslassseite geführt. Gegenüber dem keramischen Wabenkörper 3 sind die Stützstifte 14 mit Arretierungen 15 fixiert, beispielsweise verschraubt oder verklemmt.

Auf die überstehenden Endbereiche der Stützstifte 14 ist dann die Heizscheibe 2 aufgedrückt, wodurch die Heizscheibe 2 mit einem Abstand zum keramischen Wabenkörper 2 und zur Innenwandung des Mantelrohres 1 fixiert ist.

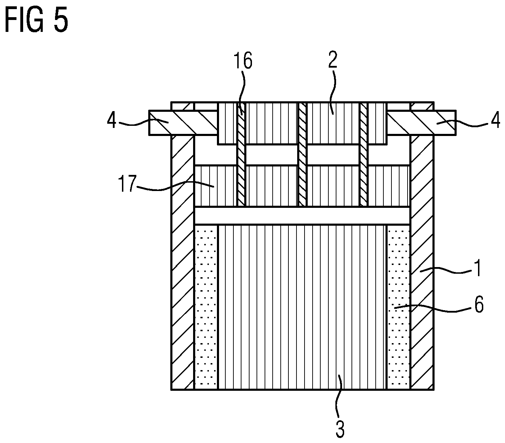

Figur 5 zeigt eine weitere alternative nicht zur Erfindung gehörige Ausführung mit dem keramischen Wabenkörper 3, der Quellmatte 6, dem Mantelrohr 1, der Heizscheibe 2 und den elektrischen Durchführungen 4, wie sie auch in vorangegangenen Figuren bereits gezeigt wurden.

Im Unterschied zu den anderen Ausführungsformen ist hier die Heizscheibe 2 mittels Stützstiften 16 mit einem weiteren metallischen Wabenkörper 17 verbunden. Der weitere metallische Wabenkörper 17 bildet einen sogenannten Stützkatalysator aus. Der Stützkatalysator dient der Fixierung der Heizscheibe 2 innerhalb des Mantelrohres 1.

Der Stützkatalysator 17 weist einen größeren Durchmesser auf als die Heizscheibe 2 und ist insbesondere so groß, dass er sich gegenüber der Innenwandung des Mantelrohres 1 abstützen kann.

Die Heizscheibe 2 ist in axialer Richtung zum Stützkatalysator 17 beabstandet und dieser wiederum von dem keramischen Wabenkörper 3. Der Stützkatalysator kann beispielsweise mit dem Mantelrohr verlötet werden, um eine sichere Fixierung zu gewährleisten.

Die unterschiedlichen Merkmale der einzelnen Ausführungsbeispiele können auch untereinander kombiniert werden.

Das Ausführungsbeispiel der Figur 2 weist insbesondere keinen beschränkenden Charakter auf und dient der Verdeutlichung des Erfindungsgedankens.

## Patentansprüche

1. Vorrichtung zur Behandlung von Abgasen eines Verbrennungsmotors, mit einer in einem Gehäuse (1) angeordneten Heizscheibe (2) und mit einem der Heizscheibe (2) in Strömungsrichtung nachgelagerten in dem Gehäuse (1) angeordnetem Hauptkatalysator (3, 13), wobei die Heizscheibe (2) und der Hauptkatalysator (3, 13) entlang der Strömungsrichtung entlang mehrerer Strömungskanäle durchströmbar sind, wobei die Heizscheibe (2) durch einen metallischen Wabenkörper gebildet ist und der Hauptkatalysator (3, 13) aus einem keramischen Wabenkörper gebildet ist, der mittels eines Fixiermittels (6) gegenüber dem Gehäuse (1) fixiert ist, wobei die Heizscheibe (2) mittels einer elektrischen Durchführung (4), welche durch das Gehäuse (1) von außen nach innen geführt ist, elektrisch kontaktiert ist, **dadurch gekennzeichnet , dass** die Heizscheibe (2) in eine keramische Halbschale (11) eingesetzt ist.

2. Vorrichtung nach Anspruch 1, **dadurch gekennzeichnet , dass** die keramische Halbschale (11) mittels eines Fixiermittels (9) gegenüber dem Gehäuse (1) fixiert ist.

3. Vorrichtung nach einem der vorhergehenden Ansprüche 1 oder 2, **dadurchgekennzeichnet, dass** die durch einen metallischen Wabenköper gebildete Heizscheibe (2) in die keramische Halbschale (11) eingedrückt ist.

4. Vorrichtung nach einem der vorhergehenden Ansprüche, **dadurch gekennzeichnet, dass** der Wabenkörper des Hauptkatalysators (13) an einer seiner Stirnflächen eine der Form der Heizscheibe (2) angepasste Ausnehmung (12) aufweist, wobei die Heizscheibe (2) in die Ausnehmung (12) in dem Wabenkörper (13) eingedrückt ist.

## Claims

1. Device for treating exhaust gases of an internal combustion engine, with a heating disc (2) arranged in a housing (1) and with a main catalytic converter (3, 13) arranged downstream of the heating disc (2) in the flow direction in the housing (1), wherein the flow can pass through the heating disc (2) and the main catalytic converter (3, 13) in the flow direction along a plurality of flow channels, wherein the heating disc (2) is formed by a metallic honeycomb body and the main catalytic converter (3, 13) is formed from a ceramic honeycomb body which is fixed in relation to the housing (1) by means of a fixing means (6), wherein the heating disc (2) is electrically contacted by means of an electrical feedthrough (4) which is guided through the housing (1) from the outside to the inside, **characterized in that** the heating disc (2) is inserted into a ceramic half-shell (11).

2. Device according to Claim 1, **characterized in that** the ceramic half-shell (11) is fixed in relation to the housing (1) by means of a fixing means (9).

3. Device according to either of the preceding Claims 1 or 2, **characterized in that** the heating disc (2) formed by a metallic honeycomb body is pressed into the ceramic half-shell (11).

4. Device according to one of the preceding claims, **characterized in that** one of the end faces of the honeycomb body of the main catalytic converter (13) has a recess (12) which is adapted to the shape of the heating disc (2), the heating disc (2) being pressed into the recess (12) in the honeycomb body (13).

## Revendications

1. Dispositif de traitement de gaz d'échappement d'un moteur à combustion interne, avec un disque chauffant (2) agencé dans un boîtier (1) et avec un catalyseur principal (3, 13) agencé dans le boîtier (1) en aval du disque chauffant (2) dans la direction d'écoulement, le disque chauffant (2) et le catalyseur principal (3, 13) pouvant être traversés par un écoulement le long de la direction d'écoulement le long de plusieurs canaux d'écoulement, le disque chauffant (2) étant formé par un corps métallique en nid d'abeilles et le catalyseur principal (3, 13) étant formé par un corps céramique en nid d'abeilles qui est fixé par rapport au boîtier (1) au moyen d'un moyen de fixation (6), le disque chauffant (2) étant mis en contact électrique au moyen d'un passage électrique (4) qui est guidé à travers le boîtier (1) de l'extérieur vers l'intérieur, **caractérisé en ce que** le disque chauffant (2) est inséré dans une demi-coque céramique (11).

2. Dispositif selon la revendication 1, **caractérisé en ce que** la demi-coque céramique (11) est fixée par rapport au boîtier (1) au moyen d'un moyen de fixation (9).

3. Dispositif selon l'une quelconque des revendications 1 ou 2 précédentes, **caractérisé en ce que** le disque chauffant (2) formé par un corps métallique en nid d'abeilles est enfoncé dans la demi-coque céramique (11).

4. Dispositif selon l'une quelconque des revendications précédentes, **caractérisé en ce que** le corps en nid d'abeilles du catalyseur principal (13) présente sur l'une de ses faces frontales un évidement (12) adapté à la forme du disque chauffant (2), le disque chauffant (2) étant enfoncé dans l'évidement (12) dans le corps en nid d'abeilles (13).
